# EUROPÄISCHE PATENTSCHRIFT

(11) **EP 1 442 065 B1**
(45) Veröffentlichungstag und Bekanntmachung des Hinweises auf die Patenterteilung: **04.10.2006**
(21) Anmeldenummer: 02800600.5
(22) Anmeldetag: 04.10.2002
(51) Int. Cl.: C08B 37/00, C08B 37/14, C09J 105/14, C08L 5/14, A23L 1/052

(54) **PFLANZLICHE HYDROKOLLOIDE ISOLIERT AUS DEN SAMEN DER PFLANZENFAMILIE LAMIACEAE**
PLANT HYDROCOLLOIDS ISOLATED FROM SEEDS OF THE PLANT FAMILY i LAMIACEAE
HYDROCOLLOIDES VEGETAUX ISOLES A PARTIR DES GRAINES DE LA FAMILLE VEGETALE LAMIACEAE

(30) Priorität: 05.10.2001 DE 10149299
(43) Veröffentlichungstag der Anmeldung: 04.08.2004
(73) Patentinhaber: Galacto Naturstoffe GmbH, 81667 München (DE)
(72) Erfinder: Meier, Manfred, 81667 München (DE); Reibenspiess, Magnus, 82299 Türkenfeld (DE); Reibenspiess, Severin, 82299 Türkenfeld (DE)
(74) Vertreter: Schnappauf, Georg
(86) Internationale Anmeldenummer: PCT/EP2002/011169
(87) Internationale Veröffentlichungsnummer: WO 2003/031478

(56) Entgegenhaltungen:
- BAVEJA S K ET AL: "EXAMINATION OF NATURAL GUMS AND MUCILAGES AS SUSTAINING MATERIALS IN TABLET DOSAGE FORMS-PART II" INDIAN JOURNAL OF PHARMACEUTICAL SCIENCES, XX, XX, Bd. 51, Nr. 4, Juli 1989 (1989-07), Seiten 115-118,123, XP001096214 ISSN: 0250-474X
- PATENT ABSTRACTS OF JAPAN vol. 015, no. 429 (C-0880), 31. Oktober 1991 (1991-10-31) & JP 03 179001 A (YOSHIHARA SEIYU KK;OTHERS: 02), 5. August 1991 (1991-08-05) & DATABASE WPI Week 199137 Derwent Publications Ltd., London, GB; AN 1991-270918 & JP 03 179001 A (JAPAN DOSSA KK), 5. August 1991 (1991-08-05)
- DATABASE WPI Week 199220 Derwent Publications Ltd., London, GB; AN 1992-164934 XP002229601 & SU 1 666 457 A (UNIV SIMF), 30. Juli 1991 (1991-07-30)
- DATABASE CHEMABS [Online] CHEMICAL ABSTRACTS SERVICE, COLUMBUS, OHIO, US; retrieved from STN Database accession no. 106-23180 XP002229600 & ROJANAPANTHU PLEUMCHITT ET AL.: WARASAN PHESATCHASAT, Bd. 13, Nr. 1, 1986, Seiten 6-11, THAILAND
- ANJANEYALU Y V ET AL: "AN ACIDIC XYLAN FROM THE CAPSULAR POLYSACCHARIDE-COMPLEX OF OCIMUM GRATISSIMUM SEEDS" CARBOHYDRATE RESEARCH, ELSEVIER SCIENTIFIC PUBLISHING COMPANY. AMSTERDAM, NL, Bd. 116, Nr. 1, 1983, Seiten 83-88, XP008012167 ISSN: 0008-6215
- R.N. THARANATHAN ET AL.: "Composition of Ocinum gratissinum (Shrubby Basil) Seed Mucilage" INDIAN JOURNAL OF CHEMISTRY, Bd. 13, Nr. 3, 1975, Seiten 307-308, XP008012165
- Y.V. ANJANEYALU ET AL.: "Composition and preliminary fractionation of the seed mucilage of Ocinum canum" AUSTRALIAN JOURNAL OF CHEMISTRY, Bd. 24, Nr. 7, 1971, Seiten 1501-1507, XP008012163
- ANJANEYALU Y. V. ET AL.: "An acidic polysaccharide from the seeds of Ocimum Adscendens" PHYTOCHEMISTRY, Bd. 23, Nr. 10, 1984, Seiten 2243-2245, XP008012169
- ROY L. WHISTLER: "industrial Gums" 1984, ACADEMIC PRESS , NEW YORK/US * Seite 303 * * Seiten 306-310 * * Seite 323 * * Seiten 326-331 *

## Beschreibung

Die Erfindung bezieht sich auf den Bereich der natürlichen Hydrokolloide und deren Verwendung.

Hydrokolloide sind oligomere oder polymere Verbindungen, die in geringen Konzentrationen relativ große Mengen an Wasser zu binden vermögen und werden deshalb auch als Verdickungsmittel genannt. Die Eigenschaft von Hydrokolloiden das Wasser in großen Mengen zu binden wird vielfältig ausgenutzt, so dass Hydrokolloide in vielen technischen Bereichen zur Anwendung kommen, wie z.B., beim Textildruck, in der Lebensmittelindustrie, beim Papierherstellungsverfahren, bei Ölbohrung, Bauindustrie, Pharmaindustrie, Lebensmittelindustrie etc.

Hydrokolloide können grob in zwei Klassen aufgeteilt werden, nämlich in viskositätsbildende Hydrokolloide und gelbildende Hydrokolloide, je nach der resultierenden Lösung, die aus der Mischung zwischen dem Hydrokolloid und Wasser entsteht. Die viskositätsbildenden Hydrokolloide bilden zähflüssige Lösungen, die keine feste Struktur aufweisen, während die gelbildenden Hydrokolloide mit Wasser Gele mit mehr oder weniger fester Struktur erzeugen. Hydrokolloide können entweder aus pflanzlichen oder tierischen Stoffen isoliert (natürliche Hydrokolloide) oder synthetisch hergestellt werden (synthetische Hydrokolloide).

Von natürlichen Vertretern sind als Produkte pflanzlicher Herkunft unter anderem viskositätsbildende Hydrokolloide aus dem Endosperm der Samen von Guarpflanzen, Johannisbrot oder Tamarindenbäumen zu nennen. Weiterhin gewinnt man gelierende Hydrokolloide hauptsächlich aus den Extrakten von Rot- und Braunalgen (Carrageenane, Alginate und Agar). Manche Hydrokolloide wie z.B. Xanthan und Gellan werden auch fermentativ erzeugt. Ein weiteres Geliermittel ist Gelatine, die aus tierischem Collagen extrahiert wird. Synthetische Hydrokolloide sind z.B. Polyvinylalkohol, Polyacrylsäuren und Polyacrylate, sowie Cellulosederivate wie Methyl- und Carboxymethylcellulosen. Eine große Gruppe stellen Stärken mit einem sehr breiten Anwendungsbereich dar. Für besondere technische Anforderungen werden natürliche Hydrokolloide auch chemisch verändert, oder miteinander vermischt, um deren Eigenschaften, wie z.B. Löslichkeit, Erhöhung der Viskosität oder Gelstärke, Elastizität oder Synerese zu verbessern.

All bislang bekannten viskositätsbildenden, nicht gelierenden, natürlichen wie synthetischen Hydrokolloiden ist gemein, dass sie mit Wasser unendlich verdünnbar sind. Dies ist in vielen Fällen erwünscht, um eine Anpassung an die geforderten Eigenschaft zu erreichen. Es gibt jedoch Anwendungen, die zwar viskositätsbildende Hydrokolloide verlangen aber auch eine definierte Wasseraufnahme und anhaltende Bindung fordern, so dass eine weitere Verdünnung oder sogar Auswaschung des Hydrokolloids unerwünscht ist. Zudem sind die bekannten Hydrokolloide mehr oder weniger empfindlich gegen notwendigerweise vorhandene oder eingebrachte Chemikalien, sowie im sauren oder basischen Bereich oder höheren Temperaturen.

Die Aufgabe der vorliegenden Erfindung besteht darin, neue natürliche Hydrokolloide bereitzustellen. Eine weitere Aufgabe der Erfindung ist, Hydrokolloide bereitzustellen, deren Wasserbindevermögen auch in Gegenwart von Salzen und in einem breiten pH-Bereich im Wesentlichen nicht beeinflusst wird. Eine weitere Aufgabe der Erfindung ist Hydrokolloide verfügbar zu machen, die zwar eine viskose Lösung bilden, die aber durch die Zugabe von auch größeren Mengen an Wasser aus ihrem wasserbindendem Zustand nicht ausgewaschen werden können.

Die Aufgaben der Erfindung wurde durch die unabhängigen Ansprüche 1 und 5 gelöst.

Es wurde überraschenderweise gefunden, dass die Hydrokolloide sehr leicht aus den Samen der Pflanzenfamilie *Lamiaceae* isoliert werden können. Zur Familie *Lamiaceae* gehören unter anderem Pflanzen wie Salbei, Rosmarin, Thymian, Oregano, Basilikum, Minze. Besonders geeignete Pflanzengattung der Familie *Lamiaceae* ist die Pflanzengattung *Ocimum,* wobei am meisten geeignet sind die Pfanzenärten *Ocimum gratissimum* oder *Ocimum sanctum.* Während aus der gesamten Pflanze ätherische Öle mit teilweise guten antiseptischen Eigenschaften isoliert werden, dienen die Pflanzensamen der Gattungen *Ocimum* überwiegend zur Ölgewinnung, da die Öle einen höhen Gehalt an ungesättigten Fettsäuren aufweisen.

Die Pflanzensamen der Familie *Lamiaceae,* insbesondere der Gattung *Ocimum* ändern durch die Zugabe von Wasser sofort ihre Farbe von grau zu weiß. An der Oberfläche des Samens ist unter dem Mikroskop eine einzigartige pelzähnliche Tentakel-Struktur sichtbar, die offenbar für die hydrokolloiden charakteristischen Eigenschaften dieser Samen verantwortlich ist. Die Begriffe wie "Pelz", "pelzähnliche Struktur", "Tentakel-Struktur" und "pelzige Tentakel-Struktur" werden nachstehend auswechselnd benutzt, um die auf der Oberfläche der Samen vorhandenen Naturstoffe mit hydrokolloiden Eigenschaften zu bezeichnen.) Die pelzige Tentakel-Struktur nimmt Wasser auf, und dient vermutlich dazu, Wurzel und Keimling während des Wachstums kontinuierlich mit Wasser zu versorgen.

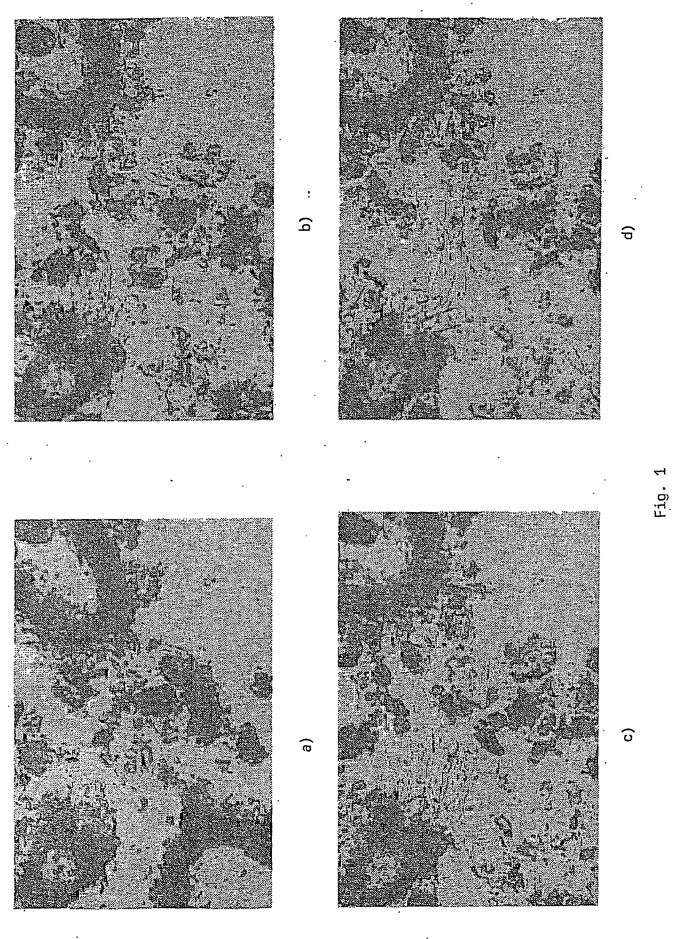

Die pelzige Tentakel-Struktur ist in Fig. 1 dargestellt.

Die mikroskopischen Bilder der Samen der Pflanzenart *Ocimum sanctum* zeigen die pelzige Tentakel-Struktur 1, 2, 3 und 4 min nachdem Wasser zugegeben wurde (Fig. 1a, 1b, 1c und 1d). Die Bilder machen deutlich mit welcher Geschwindigkeit Wasser in die pelzige Struktur aufgesogen wird.

Es wurde überraschend festgestellt, dass sowohl durch das Vermahlen von ganzen Pflanzensamen als auch durch das Vermahlen des entölten Ölkuchens eine Masse erhalten wird, die hervorragende einzigartige hydrokolloide Eigenschaften aufweist. Daher umfassen die Hydrokolloide sowohl das aus den behandelten oder unbehalten Pflanzensamen hergestellte Mehl, als auch durch das erfindungsgemäße Verfahren isolierte Naturstoffe mit hydrokolloiden Eigenschaften. Das Hydrokolloid weist einzigartige Eigenschaften auf, wie z. B. ein hohes Wasserfesthaltevermögen und darüber hinaus eine unerwartet hohe Stabilität unter extremen Bedingungen. Wie durch die Fig. 1 dargestellt, nimmt das Hydrokolloid innerhalb von wenigen Minuten eine vielfache Menge an Wasser auf und zwar unabhängig von gegebenenfalls vorhandenen Salzen. Die Kolloidlösung ist in einem breiten pH-Bereich von etwa 2 bis etwa 13 stabil, die Lösung lässt sich mit zusätzlichem Wasser nicht ohne weiteres verdünnen und weist eine unerwartete Stabilität gegen Mikroorganismen auf Des Weiteren zeigen die aus dem Hydrokolloid hergestellten Kolloidlösungen sowohl eine hohe Temperaturstabilität auf, als auch eine hohe Stabilität gegenüber starken Oxidationsmitteln, wie z.B. Wasserstoffperoxid.

Wie schon vorstehend erläutert, kann als das Hydrokolloid sowohl der isolierte, hydrokolloide Naturstoff als auch das Samenmehl der Familie *Lamiaceae,* insbesondere der Pflanzengattung *Ocimum* verwendet werden. Der Unterschied zwischen dem Samenmehl und dem isolierten Naturstoff in Bezug auf die hydrokolloiden Eigenschaften besteht lediglich darin, dass der isolierte Naturstoff erwartungsgemäß eine größere Menge an Wasser aufnehmen kann und einen definierten, höheren Reinheitsgrad aufweist. Der Naturstoff kann bis zu 200fache Menge an Wasser aufnehmen, während das Samenmehl die 8-50fache Menge an Wasser aufnehmen kann. Im Übrigen sind die hydrokolloiden Eigenschaften des Samenmehls und des isolierten hydrokolloiden Naturstoffes im Wesentlichen identisch.

Erfindungsgemäß lässt man die ganzen Samen im wässrigen Medium zuerst quellen. Die pH-Werte bzw. Temperatur können dabei im weiten Bereich variiert werden, um die Endeigenschaften des Endproduktes zu beeinflussen. Ein pH-Wert von etwa 12 bewirkt, dass das Endprodukt eine hohe Viskosität aufweist. Die herkömmlichen hydrolytischen Enzyme werden zugesetzt, um die Verarbeitung zu erleichtern.

Nach der vollkommenen Quellung der Samen werden die Samen in einem Rührwerk weiterverarbeitet. Dabei wird das aus den Samen austretende Hydrokolloid abgetragen. Eine weitere Verdünnung mit Wasser bewirkt eine Verringerung der Viskosität und erhöht das Wasseraufnahmevermögen des Endprodukts. So kann das Wasseraufnahmevermögen von 1:8 auf 1:200 erhöht werden.

Die so gewonnene Masse wird von den Samen getrennt, weiter gefiltert und durch alkoholische Fällung oder durch Pressung von Wasser befreit.

Anschließend erfolgt die endgültige Trocknung und Vermahlung des so gewonnenen Hydrokolloids.

In einer anderen Ausführungsform wird das Hydrokolloid lediglich durch eine Vermahlung der Samen auf eine Korngröße von 20 bis 1200 µm hergestellt. Da die Pflanzen der Gattung *Ocimum* auch zur Ölgewinnung verwendet werden, könnte auch der verbleibende Ölkuchen durch abwechselnde Knet-, Vermahl- und Trocknungsvorgänge als Ausgangsmaterial zur Gewinnung des Hydrokolloids genommen werden. Die Erhöhung der Wasserbindeeigenschaften wird durch Vermischen mit Wasser und anschließend Knetprozessen, Trocknung und Vermahlung erreicht.

Das Hydrokolloid eignet sich besonders gut beispielsweise für die folgenden Bereiche: für den Pharmabereich, für den Agrarbereich, für den Abwasserbereich, zur Bindung von flüssigen Explosiven, für die Textilindustrie, in der Papierindustrie, für Kosmetika oder für die Nahrungsmittelindustrie, in der Bauindustrie etc.

Das Hydrokolloid kann in der Pharmaindustrie in vielfältiger Form eingesetzt werden, wie z.B. zur Herstellung von Kapseln für Arzneimittel als Drug-Delivery-Systeme für zu verabreichende Arzneimittel oder als Depotmittel für parenterale Applikation.

Für gewisse Anwendungen können statt Wasser auch wässrige Lösungen verwendet werden, die unterschiedlichste Chemikalien enthalten. Wie oben erörtert, ist das Wasserbindevermögen des Hydrokolloids nicht abhängig von den anwesenden Salzen oder anderen Chemikalien. Das Wasserbindevermögen des erfindungsgemäßen Hydrokolloids bleibt sogar bei der 20% Kochsalzlösung erhalten. Die salzhaltigen Kolloidlösungen des Hydrokolloids können daher zur Aufnahme oder Lagerung und Speicherung von zum Beispiel Blut, Plasma oder anderen Körperflüssigkeiten verwendet werden. Des Weiteren können wegen der Stabilität der erfindungsgemäßen Kolloidlösungen in einem breiten pH-Bereich auch Lösungen anderer Chemikalien hergestellt werden. Diese Kolloidlösungen können dann für die Lagerungen von gefährlichen, ätzenden oder giftigen Chemikalien in einer Form verwendet werden, die einerseits als Lösung gehandhabt werden kann und andererseits alle Vorteile einer festen Phase aufweist.

Des Weiteren lassen sich sehr leicht Baustoffe als vorübergehend tragende Bauelemente herstellen. Die Trockenmasse aus Hydrokolloid und Wasser ist leicht und fest, so dass sich nach Einsatz von Hitzeabtrocknung des Wasserentfernens und nach Verbleib des extrem leichten netzartigen Bauelements ein maximaler Trockensubstanzwert von 4 % herstellen lässt. Solche Bauelemente sind auch nach der Trocknung stabil und atmungsfähig, so dass verbunden mit der schon erwähnten Stabilität gegenüber Mikrobenbefall, derartige Bauelemente als ideale natürliche Dämm- und Isolierstoffe einsetzbar sind.

Aus Folien, die das Hydrokolloid enthalten, lassen sich Systeme zum Filtrieren und Aufbereiten von Wasser herstellen. Solche Folien speichern Schwermetalle auf und können daher als Filtersysteme verwendet werden. Es wurde aber festgestellt, dass die Zugabe des Samenmehls als Flockungsmittel organische Verbindungen und Schwermetalle aus Wasser entfernt werden können.

Das Hydrokolloid kann auch bei der Papierherstellung eingesetzt werden, beispielsweise zur Erhöhung der Reißfestigkeit von Papier oder zur Verbesserung des Filmbaus der Papierstreichmassen.

Das Hydrokolloid kann in der Landwirtschaft verwendet werden, wenn das Kolloid mit Wasser und/oder Düngemitteln gemischt wird und daher als Wasserspeicher oder Dünger für Pflanzen verwendet wird. Auch weitere Wirkstoffe, die im Agrarbereich verwendet werden, können dem Hydrokolloid zugesetzt werden, beispielsweise Phosphate, Pestizide, Fungizide, Herbizide, Konservierungsstoffe und anionische, kationische oder nichtionische Tenside.

Die ungewöhnliche hohe Stabilität des aus dem Hydrokolloid und einer wässrigen Lösung hergestellten Wasserspeichers ermöglicht eine Wasserverweilzeit von bis zu einem Jahr. Damit steht mit dem Hydrokolloid ein System zur Verfügung, dass es in idealer Weise ermöglicht, in regenarmen Gebieten erheblich verbesserten und effizienten Anbau von ernährungs- und umweltrelevanten Pflanzenkulturen vorzunehmen. Der besondere Vorteil des so hergestellten Produkts liegt zudem darin, dass die herkömmlichen Produkte erhebliche Zeit brauchen um ihre maximale Wasserbeladung zu erreichen, während das erfindungsgemäß hergestellte Produkt binnen Minuten Wasser aufnimmt und sehr langsam das so aufgenommene Wasser abgibt. Die gegebene biologische Abbaubarkeit des Produkts ist ein weiterer Vorteil gegenüber synthetischen hydrokolloiden Produkten, die für solche Anwendung bereits eingesetzten werden.

In einer weiteren Ausführungsform wird das Hydrokolloid mit einem wassermischbaren Lösungsmittel, insbesondere mit Alkohol, Aceton oder DMSO eingesetzt. Darüber hinaus kann auch die Mischung aus den vorstehend genannten organischen Lösungsmitteln mit Wasser eingesetzt werden.

Die bevorzugte Menge an Hydrokolloid ist abhängig von der Reinheit, der Form und dem Anwendungszweck des zu verwendenden Hydrokolloids. Das Hydrokolloid kann als alleine bindende Komponente oder als Mischung mit anderen bekannten natürlichen oder synthetischen Hydrokolloiden verwendet werden. Die besonders geeigneten bekannten Hydrokolloide, die dem erfindungsgemäß hergestellten Hydrokolloid zugesetzt werden können, sind beispielsweise Agar, Pektine, Gelatine, Guar, Alginate, Carageenan, Johanissbrotkernmehl, Gummi arabicum, Xanthan, Tara, Konjak, Cassia, Stärken, Bentonit, Siliciumdioxid, PVA, Polyacrylate etc. Das Verhältnis zwischen dem erfindungsgemäß hergestellten Hydrokolloid und den bekannten Hydrokolloiden kann in breiten Bereichen von 1:99 bis 99:1 variiert werden, je nach dem, welche Eigenschaften für die herzustellende Lösung gewünscht sind.

Die Menge des gesamten Hydrokolloids kann beispielsweise zwischen etwa 0,05 bis etwa 10 Gew.% liegen, wobei der Bereich von etwa 0,1 bis etwa 4 %, wobei der Bereich von 0,5 bis 2% besonders bevorzugt ist. Falls das erfindungsgemäß hergestellte Hydrokolloid zur Herstellung von zum Beispiel, pharmazeutischen Kapseln verwendet werden soll, kann die Menge des Hydrokolloids auch erheblich höher sein. Wenn aber dünnflüssige Kolloidlösungen gewünscht sind, kann die Menge des Hydrokolloids auch unter 0,1% liegen. Die Mischungen mit weniger als 0,1% des Hydrokolloids sind bei der Herstellung von Lebensmitteln wie zum Beispiel Joghurt oder Eiscreme bevorzugt.

Die Erfindung wird nun anhand der Beispiele näher erläutert.

### Beispiel 1

### Isolierung des hydrokolloiden Naturstoffs aus der Pflanzengattung Ocimum

50 g der Samen der Pflanzenart *Ocimum gratissimum* werden mit 500 ml Wasser versetzt und nach einer Quellzeit von 20 min wird die Mischung mit einem Rührwerk bei 1000 U/min 3 min gerührt. Es werden weitere 500 ml Wasser zugegeben und wiederum 3 min bei 1000 U/min gerührt. Von den Samen löst sich der "Pelz" allmählich ab und die Lösung wird deutlich viskoser. Nach einer weiteren Zugabe von 500 ml Wasser und 5 min langem Rühren, ist die Ablösung des Pelzes ausreichend.

Die so gewonnene Lösung wird in einer Schraubenpresse von den Kernen getrennt, anschließend in einer Filterzentrifuge von den Samen befreit, getrocknet und vermahlen.

### Beispiel 2

### Herstellung eines Hydrokolloids aus den Samen der Pflanze Ocimum gratissimum

Der trockene Ölkuchen der Pflanze *Ocimum gratissimum* wird in einer Labormühle auf eine Korngröße von etwa 30 bis etwa 500 µm vermahlen.

10 g dieses Mehles werden in ein Becherglas gegeben und mit 100 ml Wasser versetzt. Nach einer Quellzeit von 10 min wird diese Mischung mit einem Rührgerät 2 min bei 1000 U/min geknetet. Das Wasser wird dabei voll gebunden.
Nach der Trocknung wird das Material wieder zu einem Pulver auf eine Korngröße von etwa 30 bis etwa 500 µm vermahlen.

Die wertvollen Eigenschaften des Hydrokolloids werden durch die folgenden Vergleichsbeispiele verdeutlicht.

### Vergleichsbeispiel 1

Guarmehl vermahlen auf eine Korngröße von etwa 75 µm und das durch Beispiel 2 hergestellte Samenmehl der Pflanze *Ocimum gratissimum* werden auf ihr Vermögen zur Entfernung von o-Nitrotoluol (Konzentration 200 mg/l) unter üblichen Bedingungen untersucht. Das Guarmehl wird herkömmlich dazu verwendet, die Schadstoffe aus Wasser zu entfernen.

Während durch die Zugabe vom Guarmehl lediglich ca. 40% von o-Nitrotoluol entfernt werden kann, bewirkt die Zugabe von der gleichen Menge des Samenmehls, hergestellt aus den Samen der Pflanzenart *Ocimum gratissimum,* eine Verminderung des o-Nitrotoluols um ca. 60%. Das bedeutet, dass das Samenmehl aus den Samen der Pflanzengattung *Ocimum* ca. 50% wirksamer ist als das Guarmehl.

### Vergleichbeispiel 2

Sand wird einerseits mit einer Menge von 0,5/1,0/2,0 und 4,0 Vol.% des Samenmehls der Pflanze *Ocimum gratissimum* und andererseits mit 2 Vol.% des herkömmlich verwendeten Polyacrylamid/Polyacrylsäure-Produkts vermischt. Die Pflanzen der Gattung *Helianthus,* die mit dem Samenmehl behandelt werden, benötigen einen deutlich längeren Zeitraum, bis eine Wiederbewässerung erfolgen muss schon bei einer Dosierung von 1,0 Vol.% des Hydrokolloids. Des weiteren ist die Biomasse deutlich höher wenn das Hydrokolloid verwendet wird.

### Vergleichbeispiel 3

1,5 Gew.% des Samenmehls der Pflanze *Ocimum gratissimum* wurde dem Sand mit einer Korngröße von maximal 1 mm zugegeben. Das Wasseraufnahmevermögen des Sands mit dem Hydrokolloid wurde verdoppelt gegenüber Sand ohne Hydrokolloid.

Nach 18 Stunden Raumtemperatur und 4 h Stunden Sonneneinstrahlung wies die Probe mit dem Hydrokolloid noch einen Restwassergehalt von 40% auf. Die Probe mit Sand ohne Hydrokolloid war im selben Zeitraum ausgetrocknet.

## Patentansprüche

1. Verfahren zur Isolierung von Hydrokolloiden aus den Samen der Pflanzen aus der Familie *Lamiaceae,* vorzugsweise der Pflarizengattung *Ocimum* und *insbesondere der Pflanzenart Ocimum sanctum* oder *Ocimum gratissimum,* **gekennzeichnet durch** folgende Schritte:
a) Anquellen der Samen **durch** Zugabe von Wasser;
b) weitere Zugabe von Wasser, um eine wässrige Phase und eine feste Phase zu erhalten;
c) Rühren der aus Schritt b) erhaltenen Mischung;
d) Abtrennen der Wasserphase von den Samenresten;
e) Isolieren des Hydrokolloids aus der abgetrennten wässrigen Phase entweder **durch** Filtrieren oder **durch** Zugabe eines organischen Lösungsmittels;
f) Trocknen des abgetrennten Hydrokolloids,
**dadurch gekennzeichnet, dass** der wässrigen Phase im Schritt b) hydrolytische Enzyme zugesetzt werden.

2. Verfahren nach Anspruch 1, **dadurch gekennzeichnet, dass** nach dem Schritt a) und vor dem Schritt b) eine weitere Zugabe von Wasser erfolgt.

3. Verfahren nach Anspruch 1 oder 2, **dadurch gekennzeichnet, dass** die wässrige Phase im Schritt b) einen pH-Wert von etwa 2 bis 13 aufweist.

4. Verfahren nach einem der Ansprüche 1 bis 3, **dadurch gekennzeichnet, dass** das organische Lösungsmittel im Schritt e) ein Alkohol ist.

5. Verwendung eines Hydrokolloids, das
(I) durch ein Verfahren zur Isolierung von Hydrokolloiden aus den Samen der Pflanzen aus der Familie *Lamiaceae,* vorzugsweise der Pflanzengattung *Ocimum* und *insbesondere der Pflanzenart Ocimum sanctum* oder *Ocimum gratissimum,* **gekennzeichnet durch** folgende Schritte:
a) Anquellen der Samen **durch** Zugabe von Wasser;
b) weitere Zugabe von Wasser, um eine wässrige Phase und eine feste Phase zu erhalten;
c) Rühren der aus Schritt b) erhaltenen Mischung;
d) Abtrennen der Wasserphase von den Samenresten;
e) Isolieren des Hydrokolloids aus der abgetrennten wässrigen Phase entweder **durch** Filtrieren oder **durch** Zugabe eines organischen Lösungsmittels;
f) Trocknen des abgetrennten Hydrokolloids
oder
(II) **durch** Vermahlen der Samen der Pflanzen aus der Familie *Lamiaceae,* insbesondere der Pflanzengattung *Ocimum sanctum* oder *Ocimum gratissimum* auf eine Korngröße zwischen 20 und 1200 µm, um ein Samenmehl zu erhalten,
erhältlich ist, (i) im Agrar- und Gartenbaubereich, (ii) zur Verbesserung der Wasserspeicherung in Böden, oder (iii) als Flockungsmittel zur Abscheidung und Trennung von Schadstoffen.

6. Verwendung nach Anspruch 5, **dadurch gekennzeichnet, dass** nach dem Schritt a) und vor dem Schritt b) eine weitere Zugabe von Wasser erfolgt.

7. Verwendung nach Anspruch 5 oder 6, **dadurch gekennzeichnet, dass** die wässrige Phase im Schritt b) einen pH-Wert von etwa 2 bis 13 aufweist.

8. Verwendung nach einem der Ansprüche 5 bis 7, **dadurch gekennzeichnet, dass** der wässrigen Phase im Schritt b) hydrolytische Enzyme zugesetzt werden.

9. Verwendung nach einem der Ansprüche 5 bis 8, **dadurch gekennzeichnet, dass** das organische Lösungsmittel im Schritt e) ein Alkohol ist.

10. Verwendung nach Anspruch 5, **dadurch gekennzeichnet, dass** das Samenmehl ferner mit Wasser vermischt wird und der so erhaltene Teig geknetet, getrocknet und vermahlen wird.

## Claims

1. A method for isolating hydrocolloids from seeds of plants of the family *Lamiaceae,* preferably of the plant genus *Ocimum,* and more preferably of the plant species *Ocimum sanctum* or *Ocimum gratissimum,* **characterized by** the following steps:
a) swelling of the seeds by adding water;
b) adding further water to obtain an aqueous phase and a solid phase;
c) agitating the mixture obtained in step b);
d) separating the aqueous phase from the seed residue;
e) isolating the hydrocolloid from the separated aqueous phase either by filtering or adding an organic solvent;
f) drying the separated hydrocolloid,
**characterized in that** hydrolytic enzymes are added to the aqueous phase in step b).

2. The method of claim 1, **characterized in that** after step a) and prior to step b) further water is added.

3. The method of claim 1 or 2, **characterized in that** the aqueous phase in step b) has a pH value of about 2 to 13.

4. The method of any one of claims 1 to 3, **characterized in that** the organic solvent in step e) is an alcohol.

5. Use of a hydrocolloid obtainable
(I) by a method for isolating hydrocolloids from seeds of plants of the family *Lamiaceae,* preferably of the plant genus *Ocimum,* and more preferably of the plant species *Ocimum sanctum* or *Ocimum gratissimum,* **characterized by** the following steps:
a) swelling of the seeds by adding water;
b) adding further water to obtain an aqueous phase and a solid phase;
c) agitating the mixture obtained in step b);
d) separating the aqueous phase from the seed residue;
e) isolating the hydrocolloid from the separated aqueous phase either by filtering or adding an organic solvent;
f) drying the separated hydrocolloid,
or
(II) by grinding seeds of plants of the family *Lamiaceae,* preferably of the plant genus *Ocimum sanctum* or *Ocimum gratissimum* to a grain size of between 20 and 1200 µm to obtain a seed meal,
(i) in the field of agriculture and horticulture, (ii) for improving the water storage in soil, or (iii) as flocculant for precipitating and separating harmful substances.

6. The use of claim 5, **characterized in that** after step a) and prior to step b) further water is added.

7. The use of claim 5 or 6, **characterized in that** the aqueous phase in step b) has a pH value of about 2 to 13.

8. The use of any one of claims 5 to 7, **characterized in that** hydrolytic enzymes are added to the aqueous phase in step b).

9. The use of any one of claims 5 to 8, **characterized in that** the organic solvent in step e) is an alcohol.

10. The use of claim 5, **characterized in that** the seed meal is further mixed with water and the thus obtained paste is kneaded, dried and grinded.

## Revendications

1. Procédé pour l'isolement d'hydrocolloïdes à partir de graines de plantes de la famille des *Lamiaceae,* de préférence du genre de plantes *Ocimum* et en particulier de l'espèce végétale *Ocimum sanctum* ou *Ocimum gratissimum,* **caractérisé par** les étapes suivantes:
a) gonflement des graines par addition d'eau;
b) autre addition d'eau pour obtenir une phase aqueuse et une phase solide;
c) agitation du mélange obtenu dans l'étape b);
d) séparation de la phase aqueuse des restes de graines;
e) isolement de l'hydrocolloïde de la phase aqueuse séparée soit par filtration soit par addition d'un solvant organique;
f) séchage de l'hydrocolloïde séparé,
**caractérisé en ce que** des enzymes hydrolytiques sont ajoutées à la phase aqueuse dans l'étape b).

2. Procédé selon la revendication 1, **caractérisé en ce qu'**une autre addition d'eau est effectuée après l'étape a) et avant l'étape b).

3. Procédé selon la revendication 1 ou 2, **caractérisé en ce que** la phase aqueuse dans l'étape b) présente une valeur de pH d'environ 2 à 13.

4. Procédé selon l'une des revendications 1 à 3, **caractérisé en ce que** le solvant organique dans l'étape e) est un alcool.

5. Utilisation d'un hydrocolloïde, qui peut être obtenu
(I) par un procédé l'isolement d'hydrocolloïdes à partir de graines de plantes de la famille des *Lamiaceae,* de préférence du genre de plantes *Ocimum* et en particulier de l'espèce vétégale *Ocimum sanctum* ou *Ocimum gratissimum,* **caractérisé par** les étapes suivantes:
a) gonflement des graines par addition d'eau;
b) autre addition d'eau pour obtenir une phase aqueuse et une phase solide;
c) agitation du mélange obtenu dans l'étape b);
d) séparation de la phase aqueuse des restes de graines;
e) isolement de l'hydrocolloïde de la phase aqueuse séparée soit par filtration soit par addition d'un solvant organique;
f) séchage de l'hydrocolloïde séparé,
ou
(II) par broyage des graines de plantes de la famille des *Lamiaceae,* de préférence du genre de plantes *Ocimum sanctum* ou *Ocimum gratissimum,* à une taille de grains entre 20 et 1200 µm, pour obtenir une farine de graines,
(i) dans le domaine de l'agriculture et du jardinage, (ii) pour l'amélioration de l'accumulation de l'eau dans le sol, ou (iii) comme agent floculant pour la séparation et l'isolement de matières nuisibles.

6. Utilisation selon la revendication 5, **caractérisée en ce qu'**une autre addition d'eau est effectuée après l'étape a) et avant l'étape b).

7. Utilisation selon la revendication 5 ou 6, **caractérisée en ce que** la phase aqueuse dans l'étape b) présente une valeur de pH d'environ 2 à 13.

8. Utilisation selon l'une des revendications 5 à 7, **caractérisée en ce que** des enzymes hydrolytiques sont ajoutées à la phase aqueuse dans l'étape b).

9. Utilisation selon l'une des revendications 5 à 8, **caractérisée en ce que** le solvant organique dans l'étape e) est un alcool.

10. Utilisation selon la revendication 5, **caractérisée en ce que** la farine de graines est en outre mélangée avec de l'eau et la pâte ainsi obtenue est malaxée, séchée et broyée.
